# EUROPÄISCHE PATENTANMELDUNG

(11) **EP 1 006 487 A2**
(43) Veröffentlichungstag der Anmeldung: **07.06.2000**
(21) Anmeldenummer: 99123381.8
(22) Anmeldetag: 24.11.1999
(51) Int. Cl.: G07C 5/08

(54) **Elektronischer Fahrtschreiber**

(30) Priorität: 04.12.1998 DE 19856017
(71) Anmelder: Mannesmann VDO Aktiengesellschaft, 60388 Frankfurt am Main (DE)
(72) Erfinder: Schaper, Dieter, Dipl.-Ing.(TU), 78048 Villingen-Schwenningen (DE)

(57) **Zusammenfassung**

Zur Verbesserung der Wahrnehmung und Verständlichkeit von Meldungen, die von einem nicht notwendigerweise im Sichtbereich des Fahrers im Fahrzeug angeordneten elektronischen Fahrtschreiber (1) ausgegeben werden, wobei der Fahrtschreiber (1) mit einer Steuereinheit (2) zur Erfassung, Registrierung und Auswertung fahrzeugbezogener und fahrerbezogener Daten ausgestattet und vorzugsweise in einem quaderförmigen Gehäuse ausgebildet ist, wird vorgeschlagen, im oder in Verbindung mit dem Fahrtschreiber (1) eine Sprachausgabevorrichtung (11) vorzusehen, die während des Fahrzeugbetriebs ohne Aufforderung durch den Fahrer eine von der Steuereinheit (2) generierte Meldung in Form von Sprache ausgibt, wenn die Auswertung der erfaßten Daten zu einem zu meldenden Ergebnis führt.

## Beschreibung

Die Erfindung betrifft einen elektronischen Fahrtschreiber gemäß dem Oberbegriff des ersten Anspruchs. Derartige Fahrtschreiber sind ihrem Aufbau nach bekannt. Heutzutage kommen immer häufiger Fahrtschreiber mit einem vorzugsweise quaderförmigen Gehäuse zum Einsatz, wobei im Gegensatz zu den herkömmlichen topfförmigen Ausgestaltungen von Fahrtschreibern in Baueinheit mit dem Fahrtschreiber ein Tachometer nicht mehr vorgesehen ist, sondern der Fahrtschreiber in der Regel über eine Datenleitung mit einem im Fahrzeug im Sichtbereich des Fahrers angeordneten Tachometer verbunden ist. Das Gehäuse der neuartigen Fahrtschreiber entspricht in Größe und Gestalt meist dem eines Autoradios. Die räumliche Trennung der Daten erfassenden und diese Daten registrierenden Funktionseinheiten des Fahrtschreibers von der die Fahrzeuggeschwindigkeit anzeigenden Funktionseinheit hat zur Folge, daß die zuerst genannten Funktionseinheiten von den Fahrzeugherstellern immer häufiger nicht mehr im unmittelbaren Sichtbereich des Fahrers, d. h. nicht mehr - wie früher üblich - im Armaturenbrett angeordnet werden.

Nun besteht gemäß den einschlägigen gesetzlichen Vorschriften der bestimmungsgemäße Zweck eines Fahrtschreibers darin, fahrzeugbezogene und fahrerbezogene Daten zu erfassen und uhrzeitrichtig zu registrieren. Zu den fahrzeugbezogenen Daten zählen die vom Fahrzeug zurückgelegte Wegstrecke und dessen Geschwindigkeit. Überdies dient ein Fahrtschreiber der lückenlosen Aufzeichnung der Arbeitszeitdaten des Fahrers, d. h. seiner Lenkzeiten, Bereitschaftszeiten und Ruhezeiten.

Die Steuereinheit des Fahrtschreibers kann so beschaffen sein, daß sie nicht nur die Erfassung und Registrierung der Daten steuert, sondern zusätzlich auch die erfaßten Daten auswertet, indem sie diese Daten im Hinblick auf festgelegte Schrankenwerte überprüft. Die Überschreitung eines Schrankenwertes von einem zulässigen Wertebereich hinüber zu einem unzulässigen Wertebereich kann eine entsprechend ausgestaltete Steuereinheit zur Ausgabe einer Meldung veranlassen. So kann der Fahrer beispielsweise bei der Überschreitung der gesetzlich zulässigen Lenkzeit auf diesen Umstand aufmerksam gemacht werden.

Sofern der Fahrtschreiber, der nicht mehr in Baueinheit mit einem Tachometer ausgestattet ist, über ein Display verfügt, könnte man zwar die von der Steuereinheit generierte Meldung durch ein optisches Zeichen auf dem Display einblenden, jedoch wäre eine derart eingeblendete Meldung in der Praxis wenig wirkungsvoll, da für den Einbau eines elektronischen Fahrtschreibers von der in Rede stehenden Bauart im Fahrzeug zunehmend nur noch Einbauorte bereitstehen, die der Fahrer von seinem Arbeitsplatz aus ohne Ablenkung von seiner eigentlichen Fahraufgabe nur noch ungenügend oder oft auch gar nicht mehr direkt einsehen kann, wie z. B. die Mittelkonsole des Fahrzeugs oder der Bereich oberhalb der Windschutzscheibe. Außerdem sind schon bedingt durch die Größe der frontseitig zur Verfügung stehenden Fläche eines in Form eines Autoradios ausgebildeten Fahrtschreibers die Anzeigeflächen von einem in dem Gehäuse des Fahrtschreibers integrierten Display zwangsläufig recht klein, so daß bei einiger Entfernung zwischen der aufrechten Sitzposition des Fahrers an seinem Arbeitsplatz und dem Einbauort des Fahrtschreibers im Fahrzeug eine zweifelsfreie Erkennung der Meldung auf dem Display nicht mehr in jedem Fall sichergestellt werden kann, wenn nicht eine Ablenkung des Fahrers von seiner eigentlichen Fahraufgabe riskiert werden soll.

Auch akustische Warnmeldungen, wie sie von einfachen Schallerzeugern wie beispielsweise Läutwerken, Summern o. ä. ausgegeben werden, führen zu keiner befriedigenden Lösung, weil ihre Meldungen in der Praxis eher als störend und lästig empfunden werden. Außerdem bedürfen die von ihnen ausgegebenen Meldungen der Interpretation, weil ihr Nachrichtengehalt nicht unmittelbar verständlich ist, sobald mehrere voneinander verschiedene Meldungen auszugeben sind. In einem solchen Fall können Verwechslungen und Mißverständnisse nicht ausgeschlossen werden.

Es ist nun die Aufgabe der vorliegenden Erfindung, einen elektronischen Fahrtschreiber mit einer Steuereinheit zur Erfassung, Registrierung und Auswertung fahrzeugbezogener und fahrerbezogener Daten derart weiter zu entwickeln, daß eine von der Steuereinheit ausgegebene Meldung vom Fahrer unmißverständlich aufgenommen werden kann, ohne seinen Blick von der Straße abzulenken.

Die Aufgabe wird durch die Merkmale des ersten Anspruchs gelöst. Die abhängigen Ansprüche zeigen vorteilhafte Ausgestaltungen und Weiterbildungen der gefundenen Lösung.

Die gefundene Lösung hat den Vorteil, daß Meldungen mittels der Sprachausgabevorrichtung differenziert und unmißverständlich dem Fahrer vermittelt werden können, ohne seine Aufmerksamkeit von der Straße abzulenken, zumal erfahrungsgemäß der Hinweis einer freundlichen Stimme größere und auch wohlwollendere Beachtung findet als das bloße Aufblinken eines Symbols oder das undifferenzierte Ertönen eines akustischen Signals.

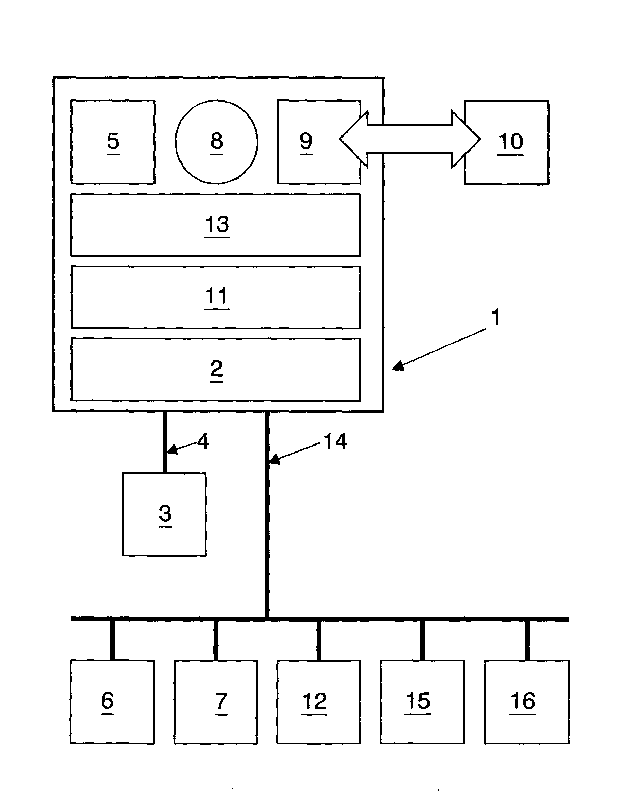

Anhand einer beigefügten **Figur** soll die vorgeschlagene Lösung nun näher erläutert werden. Die Figur zeigt in einem Blockschaltbild einen Fahrtschreiber 1, der mit einer Steuereinheit 2 zur Erfassung, Registrierung und Auswertung fahrzeugbezogener und fahrerbezogener Daten ausgerüstet ist, wobei der Fahrtschreiber in einem Fahrzeug angeordnet ist, das hier jedoch nicht dargestellt ist. Die Steuereinheit 2 erhält fahrzeugbezogene Daten beispielsweise von einem im Fahrzeug angeordneten Impulsgeber 3, der über eine den Impulsgeber 3 mit dem Fahrtschreiber 1 verbindende elektrische Leitung 4 ein zu der vom Fahrzeug zurückgelegten Wegstrecke proportionales Impulssignal an den Fahrtschreiber 1 liefert. In Verbindung mit einer dem Fahrtschreiber 1 zur Verfügung stehenden Uhr 5 kann die Steuereinheit 2 aus dem Impulssignal des Impulsgebers 3 die Geschwindigkeit des Fahrzeugs errechnen. Ebenso können ein Drehzahlmesser 6 oder eine Kraftstoffverbrauchsmeßeinrichtung 7 mit dem Fahrtschreiber 1 verbunden sein und Daten über eine separate Leitung oder einen im Fahrzeug angeordneten Datenbus 14 an die Steuereinheit 2 liefern. Im Regelfall ist auch ein im Sichtbereich des Fahrers, d.h. in der Armaturentafel angeordneter Tachometer 15 vorgesehen, der die vom Fahrtschreiber 1 ermittelten Geschwindigkeitswerte über den Datenbus 14 erhält und anzeigt.

Fahrerbezogene Daten werden der Steuereinheit 2 durch diverse Eingabemittel zugeführt. Diese Eingabemittel können ein einzelnes oder mehrere manuell vom Fahrer betätigbare Bedienelemente 8 am Fahrtschreiber 1 sein oder auch mit Daten versehene, elektronisch lesbare, in den Fahrtschreiber 1 durch geeignete Aufnahmemittel 9 einführbare fahrerbezogene Datenkarten 10. Mit den manuell betätigbaren Bedienelementen 8 kann der Fahrer dem Fahrtschreiber 1 die Art seiner Arbeitszeit anzeigen, ob es sich bei der zu registrierenden Arbeitszeit beispielsweise um Bereitschaftszeit und Ruhezeit handelt. Einer elektronisch lesbaren Datenkarte 10 kann die Steuereinheit 2 beispielsweise die Identifikation des Fahrers und seine Befugnis zum Führen des Fahrzeugs entnehmen. Optional kann der Fahrtschreiber 1 auch über nicht in Baueinheit mit dem Fahrtschreiber 1 angeordnete, sondern im Fahrzeug im Griffbereich des Fahrers vorgesehene Bedienelemente 8 bedienbar sein, was insbesondere bei bestimmten ergonomisch ungünstigen Einbaulagen des Fahrtschreibers 1 den Bedienkomfort für den Fahrer erhöht. In der Figur deutet der Doppelpfeil zwischen den im Fahrtschreiber 1 angeordneten Aufnahmemitteln 9 und der Datenkarte 10 die Kommunikation und den Datenaustausch zwischen der Steuereinheit 2 des Fahrtschreibers 1 und den in der Datenkarte 10 vorgesehenen Speichermitteln an.

Die erfindungsgemäß im oder in Verbindung mit dem Fahrtschreiber 1 vorgesehene Sprachausgabevorrichtung 11 soll dazu genutzt werden, den Fahrer auf Umstände aufmerksam zu machen, die auf sein Verhalten beim Führen des Fahrzeugs Einfluß nehmen. Stellt die Steuereinheit 2 aufgrund der ihr zur Verfügung gestellten Daten fest, daß für den gegenwärtigen Fahrer beispielsweise eine Überschreitung der gesetzlich maximal zulässigen Lenkzeit droht, soll der Fahrer während des Fahrzeugbetriebs vorzugsweise in angemessener Zeit vor Erreichen dieses Schrankenwertes unaufgefordert eine von der Steuereinheit 2 generierte Meldung in Form von Sprache erhalten. Sie könnte z.B. lauten: 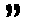 Herr Müller, Ihre zulässige Lenkzeit endet in 10 Minuten. Bitte fahren Sie den nächsten Rastplatz an." Es ist nicht vorgesehen, daß die Steuereinheit 2 aktiv in die Fahrzeugführung eingreift, weil dem Fahrer die Verantwortung für das Führen des Fahrzeugs obliegt. In angemessenen zeitlichen oder wegabhängigen Intervallen könnte die erwähnte Meldung jedoch wiederholt ausgegeben werden, sofern der Fahrer nicht unverzüglich gemäß der Anweisung handelt. Dabei könnten die zeitlichen oder wegabhängigen Intervallen für die Ausgabe der Meldung um so kürzer werden, desto näher der von der Meldung betroffene Schrankenwert rückt, also beispielsweise nach 10, 5 und dann 3 Minuten oder bei Strecken von 20, 10 und 5 Kilometern.

Nach dem Überschreiten des Schrankenwertes - hier im Beispiel der maximal zulässigen Lenkzeit - könnte die auszugebende Meldung lauten: 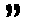 Herr Müller, Sie haben die zulässige Lenkzeit um 10 Minuten überschritten. Bitte fahren Sie den nächsten Rastplatz an." Auch diese Meldung könnte in angemessenen zeitlichen oder wegabhängigen Intervallen aktualisiert wiederholt ausgegeben werden. Ähnliche Meldungen lassen sich für eine Überschreitung anderer Schrankenwerte formulieren, wie beispielsweise der von der Bauart des Fahrzeugs abhängigen maximal zulässigen Höchstgeschwindigkeit, wie z. B.: 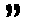 Bitte reduzieren Sie die Fahrzeuggeschwindigkeit." Oder es könnten Hinweise auf eine überhöhte Motordrehzahl oder eine passendere Gangwahl gegeben werden. Diese Aufzählung versteht sich nur exemplarisch und keineswegs abschließend, denn die Texte der auszugebenden Meldungen sollen frei programmierbar und den jeweiligen Bedürfnissen anpaßbar sein.

Die Sprachausgabevorrichtung 11 kann durch einen in den Fahrtschreiber 1 integrierten, von der Steuereinheit 2 steuerbaren Sprachsyntheziser oder in Verbindung mit einem digitalen Textspeicher realisiert sein oder dadurch, daß die Steuereinheit 2 den Befehl zur Sprachausgabe gegebenenfalls zusammen mit dem sprachlichen Inhalt der Meldung als elektrisches Signal an eine im Fahrzeug angeordnete mit dem Fahrtschreiber 1 vorzugsweise über einen Datenbus 14 kommunizierende Audioeinheit 12 absetzt. Bei dieser Audioeinheit 12 kann es sich um ein Autoradio handeln. Auf diese Weise brauchen für die Sprachausgabe benötigte Funktionsgruppen wie ein Tonverstärker, Lautsprecher und eine Lautstärkeregelung nicht redundant vorgehalten werden, sondern können im Fahrtschreiber 1 entfallen, weil die Funktionsgruppen der Audioeinheit 12 genutzt werden können. Dies führt bei der Ausgestaltung der Sprachausgabevorrichtung 11 im Fahrtschreiber 1 zu Vereinfachungen und damit zu Kostenvorteilen, weil dort nur noch die Meldungen an sich, d. h. ihre nachrichtlichen Inhalte zu generieren und der mit dem Fahrtschreiber 1 verbundenen Audioeinheit 12 zur Verfügung zu stellen sind.

Es ist vorteilhaft, im Fahrtschreiber 1 integriert oder in Verbindung mit dem Fahrtschreiber 1 einen Speicher 13 vorzusehen, in dem die in Form von Sprache auszugebenden Meldungen durch entsprechende Programmierung mehrsprachig hinterlegbar sind. Mit einem der vorhandenen Bedienelemente 8 kann dann der Fahrer die von ihm verstandene Sprache auswählen, in der die Meldungen ausgegeben werden sollen.

Manche Meldungen sind von derartiger Qualität, daß der Fahrer sie zu seiner eigenen Sicherheit, zu der Sicherheit anderer Verkehrsteilnehmer oder zur Vermeidung eines Schadens am Fahrzeug unbedingt befolgen sollte. Daher kann vorgesehen werden, daß derartige Meldungen nur durch die Befolgung ihrer Anweisung abschaltbar sind, deren Ausgabe nicht aber vom Fahrer abgeschaltet, unterdrückt oder stumm geschaltet werden kann. Beispielsweise könnte die Wiederholung einer Meldung, die den Fahrer auf eine unangemessen lange Überschreitung der maximal zulässigen Lenkzeit hinweist, nur dadurch deaktiviert werden, daß dieser Fahrer das Fahrzeug anhält und für die Dauer der gesetzlich vorgeschriebenen Ruhezeit parkt oder die Fahrzeugführung an einen anderen Fahrer übergibt. Beide Informationen stehen der Steuereinheit 2 durch die an ihr angeschlossenen Datenquellen - hier die Uhr 5, der Impulsgeber 3 und die Datenkarte 10 - zur Verfügung.

Sofern das Fahrzeug mit einem Navigationssystem 16 ausgerüstet ist, ist es vorteilhaft, dieses mit dem Fahrtschreiber 1 zu verbinden, weil dann die Möglichkeit besteht, die mittels der Sprachausgabevorrichtung 11 auszugebenden Meldungen, die gemäß der bisherigen Beschreibung nur fahrtschreiberspezifische Sachverhalte betrafen, zusätzlich mit Hinweisen auf örtliche Gegebenheiten zu verknüpfen, wie die Entfernung bis zu einem naheliegenden Rastplatz, bis zur nächsten Abfahrt von einer Fernstraße oder bis zur nächsten Tankstelle. So könnte dann beispielsweise eine Meldung lauten: 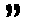 Herr Müller, Ihre zulässige Lenkzeit endet in 10 Minuten. Bitte fahren Sie den Rastplatz Neckarburg an. Sie erreichen ihn bei Weiterfahrt auf der Autobahn A81 in 6 Kilometern."

## Patentansprüche

1. Elektronischer Fahrtschreiber (1) mit einer Steuereinheit (2) zur Erfassung, Registrierung und Auswertung fahrzeugbezogener und fahrerbezogener Daten, wobei der Fahrtschreiber (1) in einem Fahrzeug angeordnet ist,
**dadurch gekennzeichnet, daß** eine Sprachausgabevorrichtung (11) vorgesehen ist, die während des Fahrzeugbetriebs ohne Aufforderung durch den Fahrer eine von der Steuereinheit (2) generierte Meldung in Form von Sprache ausgibt, wenn die Auswertung der erfaßten Daten zu einem zu meldenden Ergebnis führt.

2. Elektronischer Fahrtschreiber (1) nach Anspruch 1,
**dadurch gekennzeichnet, daß** ein Speicher (13) vorgesehen ist, in dem die in Form von Sprache auszugebende Meldung mehrsprachig hinterlegbar ist.

3. Elektronischer Fahrtschreiber (1) nach Anspruch 2,
**dadurch gekennzeichnet, daß** ein Bedienelement (8) vorgesehen ist, mit dem eine von den im Speicher hinterlegten Sprachfassungen für die auszugebende Meldung auswählbar ist.

4. Elektronischer Fahrtschreiber (1) nach einem der vorangegangenen Ansprüche,
**dadurch gekennzeichnet, daß** die von der Steuereinheit (2) generierte Meldung als elektrisches Signal einer vom Fahrtschreiber (1) getrennten Audioeinheit (12) zuführbar ist, um dort von Funktionsgruppen der Audioeinheit (12) in Form von Sprache ausgegeben zu werden.

5. Elektronischer Fahrtschreiber (1) nach Anspruch 4,
**dadurch gekennzeichnet, daß** die Zuführung des elektrischen Signals vom Fahrtschreiber (1) zu der Audioeinheit (12) über einen Datenbus (14) erfolgt.

6. Elektronischer Fahrtschreiber (1) nach Anspruch 5,
**dadurch gekennzeichnet, daß** die Audioeinheit (12) ein Autoradio ist.

7. Elektronischer Fahrtschreiber (1) nach einem der vorangegangenen Ansprüche,
**dadurch gekennzeichnet, daß** die Ausgabe von Meldungen bestimmter Qualität vom Fahrer des Fahrzeugs nur durch die Befolgung ihrer Anweisung abschaltbar ist.

8. Elektronischer Fahrtschreiber (1) nach einem der vorangegangenen Ansprüche,
**dadurch gekennzeichnet, daß** die Ausgabe von Meldungen bestimmter Qualität in einem zeitlichen oder wegabhängigen Intervall wiederholt wird.

9. Elektronischer Fahrtschreiber (1) nach einem der vorangegangenen Ansprüche,
**dadurch gekennzeichnet, daß** der Fahrtschreiber (1) mit einem Navigationssystem (16) verbunden ist und die mittels der Sprachausgabevorrichtung (11) auszugebenden Meldungen zusätzlich zu den fahrtschreiberspezifischen Meldungen Hinweise auf örtliche Gegebenheiten beinhalten, wie die Entfernung bis zu einem naheliegenden Rastplatz, bis zur nächsten Abfahrt von einer Fernstraße oder bis zur nächsten Tankstelle.
